(19) Europäisches Patentamt
European Patent Office
Office européen des brevets

(11) **EP 2 534 547 B1**

(12) **EUROPÄISCHE PATENTSCHRIFT**

(45) Veröffentlichungstag und Bekanntmachung des Hinweises auf die Patenterteilung:
**02.04.2014 Patentblatt 2014/14**

(51) Int Cl.:
***G05B 23/02*** *(2006.01)*

(21) Anmeldenummer: **11700642.9**

(22) Anmeldetag: **12.01.2011**

(86) Internationale Anmeldenummer:
**PCT/EP2011/050310**

(87) Internationale Veröffentlichungsnummer:
**WO 2011/098312 (18.08.2011 Gazette 2011/33)**

(54) **VERFAHREN ZUR VORHERSAGE DER DAUER EINES ZUKÜNFTIGEN ZEITINTERVALLS**

METHOD FOR PREDICTING THE DURATION OF A FUTURE TIME INTERVAL

PROCÉDÉ DE PRÉDICTION DE LA DURÉE D'UN INTERVALLE DE TEMPS FUTUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.02.2010 DE 102010001710**

(43) Veröffentlichungstag der Anmeldung:
**19.12.2012 Patentblatt 2012/51**

(73) Patentinhaber: **Robert Bosch GmbH**
**70442 Stuttgart (DE)**

(72) Erfinder:
• **BOEHL, Eberhard**
**72768 Reutlingen (DE)**
• **BECKER, Bernd**
**70567 Stuttgart (DE)**
• **PAWLOK, Bernard**
**70499 Stuttgart (DE)**

(56) Entgegenhaltungen:
**DE-A1-102005 047 922**

**Beschreibung**

Die Erfindung betrifft ein Verfahren zur Vorhersage der Dauer eines zukünftigen Zeitintervalls und eine Schaltungsanordnung zur Erzeugung eines vorherzusagenden Werts.

Stand der Technik

Für die Steuerung von Motoren, typischerweise Verbrennungsmotoren, existieren Sensoren, die eine Position bzw. Stellung einer sich bewegenden Komponente, bspw. der Kurbelwelle, des Motors anzeigen. Es ist bei solchen Motoren üblich, durch ein fest an der Kurbelwelle montiertes Geberrad in bestimmten Winkeln Signale von einem Sensor immer dann zu generieren, wenn eine Markierung auf dem Geberrad beginnt oder endet.

Die Druckschrift DE 100 63 755 A1 beschreibt ein Verfahren zur Ermittlung und Verifizierung des Auftretens einer Singularität bei einem Rechtecksignal. Dabei wird die Singularität erkannt, wenn die Zeiten zwischen vorgebbaren Signalabständen unmittelbar vor und hinter der Singularität in der Summe kleiner sind als die Zeit bei Auftreten der Singularität. Dieses Verfahren wird bspw. zur Auswertung einer Drehung eines rotierenden Körpers, der mit der Kurbel- bzw. der Nockenwelle einer Brennkraftmaschine verbunden ist und eine Bezugsmarke aufweist, verwendet. Das Verfahren wird dabei im Steuergerät der Brennkraftmaschine ausgeführt.

Um eine Synchronisierung mit der aktuellen Motorposition vornehmen zu können, werden dabei üblicherweise im Geberrad ein oder mehrere Markierungen ausgelassen, was auch in der Druckschrift DE 100 63 755 A1 beschrieben ist. Da die Markierungspositionen die aktuelle Motorposition allerdings nur sehr grob wiedergeben, wird eine Winkelbasis erzeugt, mit der durch eine genau definierte Anzahl von Impulsen zwischen zwei Sensorsignalen auch Zwischenpositionen bestimmt werden können. Dazu ist es u. a. erforderlich, die Zeitdauer bis zum nächsten Sensorsignal vorherzusagen.

Ein Verfahren zur Bestimmung eines Differenzwinkels einer Brennkraftmaschine zwischen einem ersten Winkelereignis und einem zweiten Winkelereignis ist aus der Druckschrift DE 10 2005 047 922 A1 bekannt. Dabei weist das erste Winkelereignis zu dem zweiten Winkelereignis einen definierten Zeitabstand auf. Bei Durchführung des Verfahrens werden, beginnend mit dem Kurbelwellenwinkel des zweiten Winkelereignisses, die Zahnzeiten der vorhergehenden Zähne ermittelt und sukzessiv zu dem Zeitabstand zwischen dem ersten und zweiten Winkelereignis addiert, wobei die Zahnwinkel der zu den jeweiligen Zahnzeiten gehörenden Zähne zu dem Differenzwinkel addiert und die Zahnzeiten aus den Zahnzeiten eines vorhergehenden Arbeitstakts multipliziert und mit einem Korrekturfaktor ermittelt werden.

Üblich ist, die Vorhersage des momentanen Zeitintervalls aus dem vorangegangenen Zeitintervall abzuleiten. Darüber hinaus gibt mit dem sogenannten IAP- bzw. Increment Angle Prediction Verfahren zur schrittweisen Voraussage eines Winkels eine Verbesserung, die auch die Verhältnisse der Sensorsignale bzgl. einer 720°-Drehung der Kurbelwelle beschreibt. Weiterhin kann es für die Berechnung von Einspritzungszeitpunkten auch erforderlich sein, dass mehrere zukünftige Zeitintervalle berücksichtigt werden. Dazu dient der sogenannte MIAP-Algorithmus (Multi Increment Angle Prediction). Auch hier werden die künftigen Inkremente auf Basis der entsprechend gemessenen Inkremente in der Vergangenheit berechnet, wie in der Druckschrift DE 10 2005 047 922 A1 beschrieben.

Offenbarung der Erfindung

Vor diesem Hintergrund werden ein Verfahren und eine Schaltungsanordnung mit den Merkmalen der unabhängigen Patentansprüche vorgestellt. Weitere Ausgestaltungen der Erfindung ergeben sich aus den abhängigen Patentansprüchen und der Beschreibung.

Im Rahmen der Erfindung kann ein Wert für eine Länge eines zukünftigen Zeitintervalls, in dem sich eine physikalische Größe üblicherweise periodisch ändert, vorhergesagt werden. Mit der physikalischen Größe kann bspw. eine Bewegung einer Komponente von einer technischen Einrichtung, bspw. von einer Maschine oder einem Motor, beschrieben werden. Falls sich die Komponente periodisch bewegt, kann mit dem zukünftigen Zeitintervall eine Periodizität der Bewegung der Komponente bestimmt werden.

Gemäß einer Ausführungsform des vorgeschlagenen erfindungsgemäßen Verfahrens wird davon ausgegangen, dass sich die Verhältnisse, in der Regel Betriebsparameter, zumindest für einzelne Komponenten des Motors periodisch wiederholen, bspw. erfolgt dies mit einer Nockenwellenumdrehung bzw. mit zwei Kurbelwellenumdrehungen. Dies ist auch dann der Fall, wenn der Motor beschleunigt oder verzögert wird. Demnach bleibt das Verhältnis zwischen zwei benachbarten Zeitintervallen an der betreffenden Position des Motors weitgehend gleich. Allerdings treten in Perioden der Beschleunigung oder Verzögerung erhöhte Abweichungen auf. Die Betriebsparameter umfassen auch Stellungen bzw. Positionen der besagten Komponenten.

Üblicherweise weist die Komponente der Einrichtung oder des Motors, deren Bewegung zu überwachen ist, Markierungen auf, die sich synchron zu der Komponente bewegen. Bewegungen der Markierungen werden sensorisch erfasst. Ein im Rahmen der Erfindung zu analysierendes, aktuelles Zeitintervall kann durch die Bewegung von zwei Markierungen, die in der Regel benachbart sind, relativ zu einer festgelegten Position als Bezugspunkt definiert werden. Somit kann das aktuelle Zeitintervall beginnen, wenn sich die erste Markierung an der festgelegten Position befindet und/oder die erste Position erreicht, und enden, sobald sich die zweite Markierung an der festgelegten Position befindet und/oder diese erreicht. Typischerweise wird ein Zeitintervall und somit auch dessen Dauer bzw. Länge durch das Auftreten von zwei aufeinanderfolgenden Ereignissen, die mit der Bewegung der Komponente verknüpft sind, definiert. Die Ereignisse werden durch die Position der Markierungen angezeigt und können durch Beobachten der Markierungen erfasst werden.

Während bei den aus dem Stand der Technik bekannten Verfahren die mittleren Abweichungen entweder unberücksichtigt bleiben oder einfach hinzuaddiert werden, ist es mit einer Ausführungsform der Erfindung möglich, auch bei unterschiedlichen Längen der Zeitintervalle bzw. entsprechenden Inkrementen durch deren Quotienten eine genauere Vorhersage über deren zeitlichen Ablauf zu treffen, weil der mittlere Fehler mit dem Quotienten multipliziert wird, bevor er in den Vorhersagewert eingeht.

Das erfindungsgemäße Verfahren kann bspw. auch für Steuerungen von Elektromotoren, z. B. Permanent-Magnet Synchronmotoren (PMSM), benutzt werden. Eine mechanische Umdrehung und/oder Position kann hierbei durch mehrere Polpaare, die als Markierungen genutzt werden, bestimmt werden. Hierbei können entsprechende elektrische Zyklen, die voneinander systematisch abweichen können, untersucht werden. Weiterhin sind damit die Auswirkungen aller Zusatzaggregate einbezogen, die während einer mechanischen Umdrehung systematisch vorkommen. Auch in diesem Fall wird das Zeitintervall dadurch definiert, wann eine erste Markierung und nachfolgend eine zweite Markierung eine als Bezugspunkt vorgesehene Position erreicht und/oder passiert.

Die Erfindung kann für eine Motorsteuerung, aber auch zur Steuerung von Einrichtungen, für die sich physikalische Größen in Zeitintervallen regelmäßig ändern, verwendet werden. Dies kann u. a. für die Regulierung eines Wasserstands, die Ladung von einer Masse, z. B. von Schüttgut, das in ein Behältnis, etwa einen Waggon, geschüttet wird, die phasengenaue Bestimmung eines Zuschaltpunkts einer Wechselstromquelle zu einem Netz, zur Vorhersage des optimalen Zeitpunkts oder die Vorhersage des Erreichens einer vorgegebenen Temperatur durch Beobachtung der Zeitpunkte mit Temperaturmarken in der Vergangenheit verwendet werden. Es kommt dabei üblicherweise auf die Vorhersage eines Zeitintervalls oder Zeitpunkts an, aber die physikalische Größe, aus der dieser Zeitpunkt abgeleitet wird, ist nicht auf eine Rotations- oder Linearbewegung eines Motors beschränkt, sondern kann auch eine Temperatur, den Pegelstand einer Flüssigkeit, die Masse eines Schüttgutes oder die Phasenlage einer periodischen Schwingung, bspw. eines Stroms oder einer Spannung, oder auch eine mechanische Schwingung eines Pendels betreffen.

Die Vorhersage des Zeitintervalls nach dem Stand der Technik ist eher ungenau, weil ein mittlerer Fehler bei der Berechnung der Abweichungen zwischen Vorhersage und Messung entweder unberücksichtigt bleibt, wie im Fall des in der Druckschrift DE 10 2005 047 922 A1 beschriebenen Verfahrens, oder lediglich addiert wird.

Eine genauere Vorhersage wird im Rahmen der Erfindung u. a. dadurch getroffen, dass der Fehler zunächst zu dem letzten Messwert hinzugezählt wird und anschließend diese Summe mit dem Verhältnis der Inkremente bzw. der Längen der Intervalle in der Vergangenheit multipliziert wird. Mit dieser Maßnahme kann auch bei einer nicht gleichmäßigen Änderung der Drehzahl oder Geschwindigkeit der Komponente eine höhere Genauigkeit erzielt werden.

Für die Abspeicherung der Vergangenheitswerte bzw. der Messwerte für die Zeitintervalle aus der Vergangenheit bzw. der vergangenen Zeitintervalle kann ein eigener Speicherbereich als Komponente einer Ausführungsform einer erfindungsgemäßen Schaltungsanordnung vorgesehen sein. Üblicherweise wird ein Zeitintervall durch zwei Zeitpunkte, die ebenfalls gemessen werden können, begrenzt. Im Rahmen der Erfindung ist es auch möglich, eine Vorhersage für ein zukünftiges Zeitintervall dadurch zu treffen, dass für zukünftige Zeitpunkte, die diese zukünftigen Zeitintervalle begrenzen, Vorhersagen getroffen werden.

Die Erfindung ermöglicht eine Vorhersage der Länge bzw. Dauer eines zukünftigen Zeitintervalls und kann für eine Motorsteuerung eingesetzt werden. Es kann auch eine Anwendung als Hardware-Lösung für eine digitale Variante einer erfindungsgemäßen Schaltungsanordnung einer Elektromotoransteuerung in einem Hybridfahrzeug vorgesehen sein.

Die erfindungsgemäße Schaltungsanordnung ist dazu ausgebildet, sämtliche Schritte des vorgestellten Verfahrens durchzuführen. Dabei können einzelne Schritte dieses Verfahrens auch von einzelnen Komponenten der Schaltungsanordnung durchgeführt werden. Weiterhin können Funktionen der Schaltungsanordnung oder Funktionen von einzelnen Komponenten der Schaltungsanordnung als Schritte des Verfahrens umgesetzt werden. Außerdem ist es möglich, dass Schritte des Verfahrens als Funktionen wenigstens einer Komponente der Schaltungsanordnung oder der gesamten Schaltungsanordnung realisiert werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen

Figur 1 zeigt in schematischer Darstellung ein Diagramm zu einer ersten Ausführungsform des erfindungsgemäßen Verfahrens.

Figur 2 zeigt in schematischer Darstellung ein Diagramm zu einer zweiten Ausführungsform des erfindungsgemäßen Verfahrens.

Figur 3 zeigt in schematischer Darstellung eine Ausführungsform einer erfindungsgemäßen Schaltungsanordnung.

Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

Die Figuren werden zusammenhängend und übergreifend beschrieben, gleiche Bezugszeichen bezeichnen gleiche Komponenten.

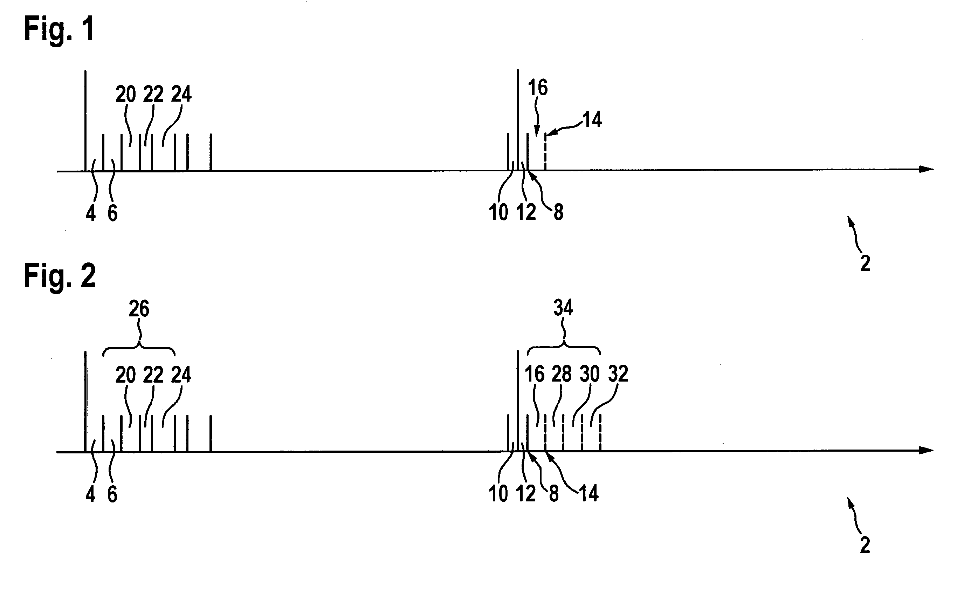

Die beiden Diagramme aus den Figuren 1 und 2 umfassen jeweils eine horizontal orientierte Zeitachse 2, entlang der Zeitpunkte, zu denen Markierungen einer sich periodisch bewegenden Komponente eines Verbrennungsmotors sensorisch erfasst werden, durch Striche dargestellt sind. Zwischen diesen Zeitpunkten sind Zeitintervalle dargestellt. Nämlich ein k-tes vergangenes Zeitintervall 4 mit der Länge DT (-k) und ein -k+1-tes vergangenes Zeitintervall 6 mit der Länge DT (-k+1), die bereits in der Vergangenheit ermittelt worden sind. Außerdem sind in den Diagrammen beider Figuren 1 und 2 ein zuletzt bzw. aktuell gemessener Zeitpunkt 8 sowie die beiden unmittelbar zuvor ermittelten vergangenen Zeitintervalle 10 mit der Länge DT (-1) und 12 mit der Länge DT (0) gezeigt. Das Diagramm aus Figur 1 zeigt zudem einen vorherzusagenden Zeitpunkt 14. Eine Länge CDT (1) eines vorherzusagenden zukünftigen Zeitintervalls 16 wird durch den zuletzt gemessenen Zeitpunkt 8 und den vorherzusagenden Zeitpunkt 14 begrenzt.

In den Diagrammen sind zusätzlich zu dem -k+1-ten vergangenen Zeitintervall 6 drei weitere nachfolgende, vergangene Zeitintervalle 20, 22, 24 dargestellt, die im Diagramm aus Figur 2 zu einem Gesamtintervall 26 aus der Vergangenheit zusammengefasst sind. Figur 2 zeigt auch vier zukünftige Zeitintervalle 16, 28, 30, 32, die zu einem gemeinsamen Vorhersagewert 34 mit der Länge DTA(m) zusammengefasst sind.

Bei Durchführung der beiden genannten Ausführungsformen des erfindungsgemäßen Verfahrens wird angenommen, dass der in Betracht zu ziehende Bereich die letzten k vergangenen Zeitintervalle 4, 6, 20, 22, 24 umfasst und dass sich die systematischen Bedingungen mit der Periodizität von k wiederholen, so kann zum Beispiel k die Anzahl der Markierungen eines auf der Kurbelwelle fest montierten Geberrads sein, wenn für eine Kurbelwellenumdrehung eine Periodizität angenommen wird. Dabei können auch systematisch fehlende Markierungen mit berücksichtigt werden, wenn das Fehlen festgestellt und durch zusätzliche Informationen auf die Anzahl der fehlenden Markierungen geschlossen werden kann. Ebenso kann mit k die Anzahl der Markierungen für eine Nockenwellenumdrehung festgelegt werden, weil nicht jede Kurbelwellenumdrehung die gleichen Bedingungen aufweist.

Mittels mindestens einem Sensor, der das Vorliegen einer Markierung an einem als Geberrad ausgebildeten Gebermodul signalisiert, wird die Position der Kurbelwelle bestimmt. Dies erfolgt typischerweise dann, wenn eine Anfangsposition bekannt ist oder eine ausgewählte Position durch eine fehlende Markierung im Verlauf ermittelbar ist. Durch zusätzliche Nockenwellensignale wird auch diese Markierung mit in die Betrachtung einbezogen.

Solange noch keine fehlende Markierung erkannt ist, kann zunächst k=1 gesetzt und somit das Verhältnis XDT(0) der letzten beiden gemessenen vergangenen Zeitintervalle, im Fall der Ausführungsform aus Figur 1 das Verhältnis der Länge DT(-k+1) des 1-k-ten vergangenen Zeitintervalls 6 (-k+1) und der Länge DT(-k) des k-ten vergangenen Zeitintervalls 4, auf das Verhältnis der vorherzusagenden Länge CDT(1) des ersten zukünftigen Zeitintervalls 16 zum letzten gemessenen, aktuellen Zeitintervall 12 mit der Länge DT(0) übertragen werden.

Dabei werden auch Beschleunigungs- und Verzögerungsanteile mit berücksichtigt, wobei angenommen wird, dass sich diese in der Zukunft gleichartig fortsetzen. Unter Berücksichtigung des mittleren Fehlers kann eine Korrektur vorgenommen werden. Wird k=0 und ein Verhältnis der Länge von zwei unmittelbar aufeinander folgenden Zeitintervallen XDT(i)=1 gesetzt, so kann einfach davon ausgegangen werden, dass ein neues Zeitintervall genauso lang wie das vorangegangene Zeitintervall ist.

Weiterhin ist es auch möglich, den Wert k so zu wählen, dass dieser der Anzahl der Markierungen pro Zylinder eines Verbrennungsmotors entspricht. So kann zumindest zeitweise, z. B. wenn noch keine Informationen über eine oder zwei Kurbelwellenumdrehungen verfügbar sind, davon ausgegangen werden, dass näherungsweise für jeden Zylinder die gleichen Bedingungen bezüglich der Beschleunigung im Verbrennungsvorgang oder der Verzögerung bei der Kompression vorliegen.

In einem Speicherbereich werden die Längen DT(i) der letzten k vergangenen Zeitintervalle 4, 6, 10, 20, 22, 24, d. h. die Längen DT(-k), DT(-k+1), ... DT(-1), gespeichert, um daraus die aktuelle Dauer bzw. Länge CDT(1) des gerade begonnenen, zukünftigen Zeitintervalls 16 mit der oben beschriebenen Periodizität vorherzusagen.

Aus diesen Werten wird das Verhältnis XDT der Längen von zwei vergangenen, unmittelbar aufeinanderfolgenden Zeitintervallen mit der Periodizität k, wie nachfolgend gezeigt, entsprechend dem Index k eines Zeitintervalls berechnet:

$$XDT(0) = DT(-k+1)/DT(-k).$$

Dieses berechnete Verhältnis XDT(0) oder ggf. nur der reziproke Wert RDT(-k) = 1/DT(-k) kann gespeichert werden.

Für den Fall einer Nutzung des reziproken Werts RDT(-k) können Divisionen eingespart werden, weil der reziproke Wert RDT(-k) auch für die Berechnung anderer Verhältnisse benutzt werden kann.

Der vorher bestimmte und gespeicherte Wert XDT(-1) bzw. RDT(-1) für das vorherige vergangene Zeitintervall 10 wird benutzt, um den Wert der Länge bzw. Dauer CDT(1) des aktuell begonnen, zukünftigen Zeitintervalls 16 vorauszusagen, indem das Verhältnis XDT(-1) mit der Länge DT(-1) des vergangenen Zeitintervalls 10 multipliziert wird. Dabei wird davon ausgegangen, dass sich die Verhältnisse nach jeweils k Werten periodisch wiederholen, wie es bspw. in dem Diagramm aus Figur 1 der Fall ist. Nachdem der tatsächliche Wert der Länge DT(0) des letzten aktuellen Zeitintervalls 12, das zum aktuell gemessenen Zeitpunkt 8 beendet ist, gemessen wird, kann ein Fehler EDT (0) für die Vorhersage wie folgt bestimmt werden:

$$EDT(0) = DT(0) - XDT(-1)*DT(-1)$$

und mit

$$XDT(-1) = DT(-k)/DT(-k-1)$$

wird damit

$$EDT(0) = DT(0) - DT(-k)*DT(-1)/DT(-k-1).$$

Für den Fall k=1, wird in Ausgestaltung nur ein vergangenes Inkrement bzw. Zeitintervall zur Berechnung herangezogen, dadurch ergibt sich für den Fehler:

$$EDT(0) = DT(0) - (DT(-1))^2/DT(-2)$$

oder

$$EDT(0) = DT(0) - (DT(-1))^2 * RDT(-2).$$

Durch rekursive Addition des Fehlers EDT mit einer mittleren Abweichung MEDT und einer Division durch zwei ergibt sich die neue mittlere Abweichung mit MEDT($-\infty$)=0:

$$MEDT(0) = (EDT(0) + MEDT(-1))/2.$$

Aus allen diesen nun ermittelten Werten wird der neue Vorhersagewert für die Länge CDT(1) des zukünftigen Zeitintervalls 16 wie folgt bestimmt:

$$CDT(1) = (DT(0) + MEDT(0)) * XDT(0)$$

oder mit Hilfe des reziproken Wertes RDT

$$CDT(1) = (DT(0) + MEDT(0)) * DT(-k+1) * RDT(-k).$$

Für das Beispiel aus Figur 1 ergibt sich für den Fehler der letzten Vorhersage:

$$EDT(0) = DT(0) - CDT(-1) * XDT(-1).$$

Der gewichtete mittlere Fehler der Vorhersage ist:

$$MEDT(0) = ( EDT(0) + MEDT(-1))/2.$$

Daraus ergibt sich für den Vorhersagewert:

$$CDT(1) = (DT(0) + MEDT(0)) * XDT(0).$$

Dieser Vorhersagewert für die Dauer bzw. Länge CDT(1) des nächsten zukünftigen Zeitintervalls 16 variiert bei Beschleunigung oder Verzögerung mit dem Wert der Länge DT(0) des zuletzt gemessenen aktuellen Zeitintervalls 12 und berücksichtigt Abweichungen der vorangegangenen Messungen für die präzisere Vorhersage.

Auch werden bei einem Verbrennungsmotor die ggf. unterschiedlichen Verbrennungs- und Kompressionsvorgänge jedes einzelnen Zylinders berücksichtigt, wenn k so gewählt wird, dass die Messdaten von zwei Kurbelwellenumdrehungen herangezogen werden. Auch systematische Einflüsse von Zusatzaggregaten, wie zum Beispiel das Einsetzen der Hydraulikpumpe, können damit einkalkuliert werden. Durch die Einbeziehung des mittleren Fehlers in die Vorhersage werden Änderungen der mittleren Drehzahl durch Beschleunigungsvorgaben, die üblicherweise über das Gaspedal bereitgestellt werden, oder durch Verzögerungen, die von der Motor-Bremse erzeugt werden, für die Vorhersage zumindest teilweise mit einbezogen.

Auch externe Einflüsse, die von Kupplung, Getriebe, Rädern, Fahrbahn, Wind usw. ausgehen, nehmen auf die Vorhersage Einfluss, ohne dass eine Überreaktion und damit ein Aufschaukeln der Werte erfolgt. Das ist in der Regel dadurch gegeben, dass die letzte ermittelte Abweichung nur zur Hälfte in die neue Berechnung eingeht und vorangegangene Abweichungen einen jeweils geringeren Einfluss haben. Die Realisierung des Verfahrens kann mittels eines Hauptprozessors (CPU) in der Software und/oder mittels einer Spezial-Hardware als mögliche Komponenten einer Ausführungsform der erfindungsgemäßen Schaltungsanordnung erfolgen.

In einer weiteren Ausgestaltung der Erfindung können mehrere zukünftige Inkremente bzw. zukünftige Zeitintervalle 16, 28, 30, 32, die zusammen einen Vorhersagewert 34 bilden, vorhergesagt werden, wenn die Summe der Längen der vergangenen Zeitintervalle 6, 20, 22, 24 bzw. Inkremente aus der Vergangenheit zu der Länge RDT(-k) des vorangegangenen vergangenen Zeitintervalls 4 aus der Vergangenheit ins Verhältnis gesetzt wird.

Für m zukünftige Zeitintervalle 16, 28, 30, 32 ergibt sich damit ein im Diagramm aus Figur 2 gezeigtes Verhältnis PDT(m) zur Umsetzung eines MIAP-Algorithmus, mit dem eine Vorhersage mehrerer Winkelinkremente möglich ist. Damit kann dann die Zeitdauer für die folgenden m zukünftigen Zeitintervalle 16, 28, 30, 32 bzw. Inkremente entsprechend dem Vorhersagewert für die Länge DTA(m) für die m zukünftigen Zeitintervalle 16, 28, 30, 32 vorausberechnet werden.

So wird bspw. durch die in Ausgestaltung der Erfindung vorgeschlagene Speicherung des voranstehend beschriebenen Reziprokwerts anstelle des Quotienten die Anzahl der notwendigen Divisionen verringert, weil der Reziprokwert durch Multiplikation mit verschiedenen Summenwerten immer den aktuellen Verhältniswert anzeigt. Die Division wird deshalb nur einmal durchgeführt. Weiterhin sind jeweils nur Multiplikationen notwendig, die mit verringertem Hardware-Aufwand bzw. mit geringerer Rechenzeit durchführbar sind.

Im Detail wird in der anhand von Figur 2 gezeigten Anführungsform des erfindungsgemäßen Verfahrens zunächst ein Verhältnis PDT (0) der Längen der m zukünftigen Zeitintervalle 16, 28, 30, 32 bzw. Inkremente zu mindestens einem vorhergehenden, vergangenen Zeitintervall einer Periode bestimmt, wobei die Längen der vorhergehenden, vergangenen Zeitintervalle 4, 6, 10, 20, 22, 24 aus der Vergangenheit summiert und durch die Länge DT(-k) des zuletzt betrachteten vergangenen Zeitintervalls aus der Vergangenheit dividiert wird:

$$PDT(0) = \frac{\sum_{i=1}^{m} DT(-k+1)}{DT(-k)} = RDT(k) * \sum_{i=1}^{m} DT(-k+1).$$

Für den Fehler EDT(0) der letzten Vorhersage ergibt sich, analog zu Figur 1:

$$EDT(0) = DT(0) - ( DT(1) * PDT(-1)).$$

Der gewichtete mittlere Fehler MEDT(0) der Vorhersage ist beispielsweise:

$$MEDT(0) = (EDT(0) + MEDT(-1))/2,$$

kann aber auch anders gewichtet sein, wie beispielsweise:

$$MEDT(0) = (EDT(0) + 2*MEDT(-1))/3 \text{ oder}$$

$$MEDT(0) = (2*EDT(0) + MEDT(-1))/3 \text{ oder}$$

$$MEDT(0) = (3*EDT(0) + MEDT(-1))/4 \text{ und so weiter.}$$

Insgesamt gilt für den Vorhersagewert für die Länge DTA(m) der m zukünftigen Zeitintervalle:

$$DTA(m) = (DT(0) + MEDT(0)) * PDT(0).$$

In einer Variante der Erfindung können statt der Markierungen des beschriebenen Geberrads an einer Kurbelwelle oder einer Nockenwelle als Markierungen auch Signale eines Gebermoduls, die von Sensoren erfasst und an einem Elektromotor (PMSM) angeordnet sind, verarbeitet werden, wobei typischerweise drei Sensoren vorgesehen sind, die einen elektrischen Zyklus in sechs Bereiche unterteilen. Ebenso ist eine Vorhersage einer Bewegung einer Geberstange, wie bspw. einer Zahnstange, für eine periodisch wiederholte lineare links-rechts Bewegung denkbar.

Weiterhin können auch Flüssigkeitsstandgeber für ein periodisches Auffüllen und Ablassen einer Flüssigkeit als Komponente einer Einrichtung, bspw. eines Motors untersucht werden. Der Stand einer Flüssigkeit kann auch dadurch reguliert werden, wenn für den Flüssigkeitsstandgeber aus der Vergangenheit das Erreichen eines Pegelstandes prognostiziert werden soll. Damit kann bspw. der Zeitpunkt bestimmt werden, an dem ein Ventil geöffnet oder geschlossen werden soll.

Durch kontinuierliche Messung der Masse einer Komponente in einem Behälter, wobei an vorgegebenen diskreten Massewerten jeweils ein Signal ausgegeben wird, kann bestimmt werden, zu welchem Zeitpunkt ein Zielmassewert erreicht wird, an dem die Zuführung und/oder der Abtransport der Masse gestoppt wird. Durch Ausgabe eines Signals an einem Temperaturgeber, z. B. je für 1°C kann der Zeitpunkt bestimmt werden, an dem eine positive oder negative Wärmezufuhr gestoppt werden muss, um eine Zieltemperatur zu erreichen. Durch Ausgabe von Signalen beim Nulldurchgang und/oder dem Maximum bzw. dem Minimum einer Schwingung kann der Zeitpunkt für eine gewünschte Phasenlage vorhergesagt werden, z .B. zur Zuschaltung einer Wechselstromquelle, oder zum Einkuppeln einer mechanischen Komponente.

In einer weiteren Ausgestaltung können auch ausgewählte Werte für physikalische und somit auch elektronische Größen, bspw. analoge Spannungs-, Strom-, Widerstands- oder Kapazitätswerte als sich periodisch ändernde Werte des Gebermoduls betrachtet werden. Dies betrifft zum Beispiel einen Nulldurchgang, ein Maximum oder ein Minimum einer Sinusschwingung für eine beliebige physikalische Größe. Unabhängig davon, für welche technischen Module Bewegungen zu bestimmen sind, sind diese mit Markierungen versehen, deren Bewegungen sensorisch erfasst werden können. Ein zu messendes und/oder vorherzusagendes zukünftiges Zeitintervall 16, 28, 30, 32 ist durch das Eintreten von zwei Ereignissen definiert, wobei ein erstes Ereignis in der Regel dann eintrifft, wenn eine erste Markierung eine definierte Position erreicht hat, und wobei ein zweites Ereignis eintritt, wenn eine zweite Markierung die definierte Position erreicht.

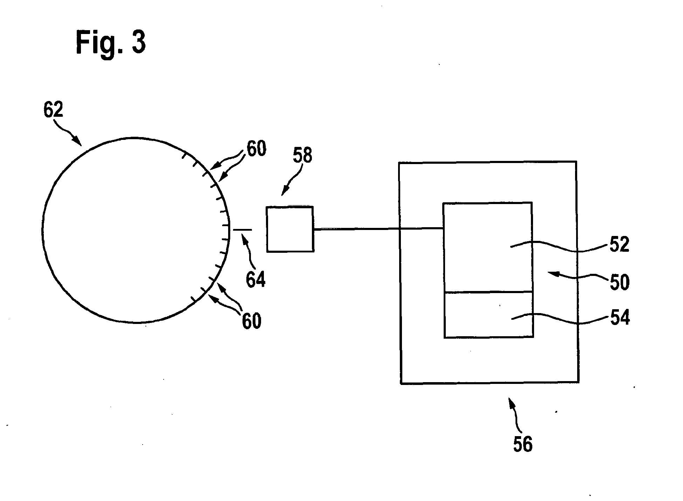

Figur 3 zeigt in schematischer Darstellung eine Ausführungsform einer erfindungsgemäßen Schaltungsanordnung 50, die ein Datenverarbeitungsmodul 52 sowie einen Speicherbereich 54 umfasst und in einem Steuergerät 56 eines Verbrennungsmotors angeordnet ist. Die Schaltungsanordnung 50 ist mit einem Sensor 58 verbunden. Der Sensor 58 ist dazu ausgebildet, Markierungen 60, die auf einem sich periodisch bewegenden Geberrad 62 als Gebermodul angeordnet sind, zu erfassen. Das Geberrad 62 ist mit einer nicht gezeigten Nocken- oder Kurbelwelle des Verbrennungsmotors verbunden ist. Demnach wird eine Bewegung der Nocken- oder Kurbelwelle durch eine Bewegung der Markierungen 60 des Geberrads 62 wiedergegeben. Eine zu messende sowie vorherzusagende Dauer eines Zeitintervalls hängt von der Zeit ab, die zwischen einem Passieren von zwei benachbarten Markierungen 60 des sich bewegenden Geberrads 62 vergeht.

Mit der Schaltungsanordnung 50 ist eine Vorhersage der Dauer eines zukünftigen Zeitintervalls unter Berücksichtigung von bis zu k Messwerten in der Vergangenheit und einem zusätzlichen aktuellen Messwert möglich. Hierbei weisen die Messwerte eine Periodizität in k in der Form auf, dass benachbarte Messwerte ein bestimmtes systematisches Verhältnis zueinander besitzen, das durch konstruktive oder betriebsbedingte Eigenschaften, hier des Geberrads 62, begründet ist. Zur Vorhersage des zukünftigen Zeitintervall zwischen zwei Markierungen 60 wird das Verhältnis des von dem aktuellen Messwert um k zurückliegenden Messwert zu mindestens einem nachfolgendem Messwert benutzt, um aus dem aktuellen Messwert auf den vorherzusagenden folgenden Messwert zu schließen, wobei ein mittlerer Fehler zu dem letzten Messwert addiert wird, bevor ein Verhältnis der Messwerte aus der Vergangenheit auf diese Summe angewendet wird. Dabei kann aus dem vorhergesagten Messwert des letzten, vergangenen Zeitintervalls und dem tatsächlich festgestellten Messwert des letzten, vergangenen Zeitintervalls eine Abweichung durch Differenzbildung ermittelt werden, wobei diese Abweichung in den mittleren Fehler eingeht. Es ist auch vorgesehen, dass die Abweichungen der letzten Vorhersagen in den mittleren Fehler eingehen und dabei die zeitlich weiter entfernt liegenden Werte für Abweichungen ein umso geringeres Gewicht besitzen, je weiter sie in der Vergangenheit zurückliegen.

Mit dem im Rahmen der Erfindung vorhergesagten Wert, der mit dem beschriebenen Algorithmus ermittelt wird, ist eine Kontrolle und somit Steuerung und/oder Regelung der Funktion mindestens einer Komponente des Motors und somit ggf. auch des kompletten Motors möglich.

**Patentansprüche**

1. Verfahren zur Vorhersage eines Werts für eine Länge eines zukünftigen Zeitintervalls (16, 28, 30, 32), in dem sich eine physikalische Größe ändert, bei dem

   - mindestens ein gemessener Wert für die Länge eines vergangenen Zeitintervalls (4, 6, 10, 20, 22, 24) und ein gemessener Wert für eine Länge eines aktuellen Zeitintervalls (12) berücksichtigt werden,
   - m Werte für Längen von vergangenen Zeitintervallen (4, 6, 10, 20, 22, 24) addiert werden, wobei ein erster Wert von dem aktuell gemessenen Wert um k-1 und ein m-ter Wert von dem aktuell gemessenen Wert um k-m zurückliegt, und wobei die m addierten Werte durch einen Wert einer Länge eines vergangenen Zeitintervalls (4, 6, 10, 20, 22, 24), das von dem aktuell gemessenen Wert um k zurückliegt, dividiert wird, wobei ein Verhältnis der genannten Werte gebildet wird, und bei dem
   - zur Bestimmung des vorherzusagenden Werts zunächst ein mittlerer Fehler zu dem aktuell gemessenen Wert addiert und somit eine Summe gebildet und nachfolgend das gebildete Verhältnis mit der Summe multipliziert wird,
   - wobei der vorhergesagte Wert zur Steuerung eines Motors, zur Steuerung des Pegelstands einer Flüssigkeit, zur Steuerung der Masse einer Komponente, zur Steuerung der Temperatur einer Komponente und/oder zur Bestimmung einer vorgegebenen Phasenlage einer Komponente verwendet wird, um damit den Zeitpunkt für ein Ereignis zu bestimmen.

2. Verfahren nach Anspruch 1, bei dem ein Wert für m größer gleich 1 und kleiner gleich k gewählt wird.

3. Verfahren nach einem der voranstehenden Ansprüche, bei dem die Werte für die Längen von Zeitintervallen (4, 6, 10, 12, 16, 20, 22, 24, 28, 30, 32) eine Periodizität in k aufweisen, und bei dem Werte für Längen benachbarter Zeitintervalle (4, 6, 10, 12, 16, 20, 22, 24, 28, 30, 32) ein systematisches Verhältnis zueinander aufweisen.

4. Verfahren nach einem der voranstehenden Ansprüche, bei dem für mindestens ein vergangenes Zeitintervall (4, 6, 10, 20, 22, 24) aus einem vorhergesagten Wert für die Länge dieses vergangenen Zeitintervalls (4, 6, 10, 20, 22, 24) und einem tatsächlich festgestellten Wert der Länge dieses vergangenen Zeitintervalls (4, 6, 10, 20, 22, 24) durch Differenzbildung eine Abweichung ermittelt wird, wobei diese mindestens eine ermittelte Abweichung in den mittleren Fehler eingeht.

5. Verfahren nach Anspruch 4, bei dem mehrere ermittelte Abweichungen in Abhängigkeit davon, wie weit eine für ein vergangenes Zeitintervall (4, 6, 10, 20, 22, 24) gebildete Abweichung in der Vergangenheit zurückliegt, gewichtet werden, wobei weiter in der Vergangenheit zurückliegende Abweichungen weniger stark gewichtet werden.

6. Verfahren nach einem der voranstehenden Ansprüche, bei dem vorgesehen ist, dass die Komponente eine Anzahl Markierungen (60) aufweist, die sich bei einer Bewegung der Komponente relativ zu einer definierten Position (64) bewegen, wobei ein Beginn eines Zeitintervalls (4, 6, 10, 12, 16, 20, 22, 24, 28, 30, 32) durch den Zeitpunkt (8) festgelegt wird, an dem sich eine erste Markierung (60) an der definierten Position (64) vorbeibewegt, und wobei ein Ende eines Zeitintervalls (4, 6, 10, 12, 16, 20, 22, 24, 28, 30, 32) durch den Zeitpunkt (8) festgelegt wird, an dem sich eine zweite Markierung (60) an der definierten Position (64) vorbeibewegt.

7. Verfahren nach einem der voranstehenden Ansprüche, bei dem der Wert für eine als Gebermodul ausgebildete Komponente des Motors ausgeführt wird, die eine periodische Bewegung ausführt.

8. Schaltungsanordnung zur Erzeugung eines vorherzusagenden Werts, die mindestens ein Datenverarbeitungsmodul (52) aufweist, das dazu ausgebildet ist, einen Wert für eine Länge eines zukünftigen Zeitintervalls (16, 28, 30, 32), in dem sich eine physikalische Größe ändert, zu bestimmen, und dabei mindestens einen gemessenen Wert für die Länge eines vergangenen Zeitintervalls (4, 6, 10, 20, 22, 24) und einen aktuell gemessenen Wert für eine Länge eines aktuellen Zeitintervalls (12) zu berücksichtigen, und m Werte für Längen von vergangenen Zeitintervallen (4, 6, 10, 20, 22, 24) zu addieren, wobei ein erster Wert von dem aktuell gemessenen Wert um k-1 und ein m-ter Wert von dem aktuell gemessenen Wert um k-m zurückliegt, und die m addierten Werte durch einen Wert einer Länge eines vergangenen Zeitintervalls (4, 6, 10, 20, 22, 24), das von dem aktuell gemessenen Wert um k zurückliegt, zu dividieren und dabei ein Verhältnis der genannten Werte zu bilden, und wobei das Datenverarbeitungsmodul (52) dazu ausgebildet ist, zur Bestimmung des vorherzusagenden Werts zunächst einen mittleren Fehler zu dem aktuell gemessenen Wert zu addieren und somit eine Summe zu bilden und nachfolgend das gebildete Verhältnis auf diese Summe anzuwenden, wobei der vorhergesagte Wert zur Steuerung eines Motors, zur Steuerung des Pegelstands einer Flüssigkeit, zur Steuerung der Masse einer Komponente, zur Steuerung der Temperatur einer Komponente und/oder zur Bestimmung einer vorgegebenen Phasenlage einer Komponente verwendet wird, um damit den Zeitpunkt für ein Ereignis zu bestimmen.

9. Schaltungsanordnung nach Anspruch 8, die als Modul eines Steuergeräts (56) für einen Verbrennungsmotor ausgebildet ist.

**Claims**

1. Method for predicting a value of a length of a future time interval (16, 28, 30, 32) in which a physical variable changes, in which

   - at least one measured value for the length of a past time interval (4, 6, 10, 20, 22, 24), and a measured value for a length of a current time interval (12) are taken into account,
   - m values for lengths of past time intervals (4, 6, 10, 20, 22, 24) are added, a first value preceding the currently measured value by k-1, and an mth value preceding the currently measured value by k-m, and the m added values being divided by a value of a length of a past time interval (4, 6, 10, 20, 22, 24) which precedes the currently measured value by k, a ratio of said values being formed, and in which
- to determine the value to be predicted, an average error is firstly added to the currently measured value and a sum is thereby formed, and the ratio formed is subsequently multiplied by the sum,
- the predicted value being used to control a motor, to control the level of a liquid, to control the mass of a component, to control the temperature of a component, and/or to determine a prescribed phase relation of a component, in order thereby to determine the timing for an event.

2. Method according to Claim 1, in which a value for m is selected to be greater than or equal to 1 and less than or equal to k.

3. Method according to one of the preceding claims, in which the values for the lengths of time intervals (4, 6, 10, 12, 16, 20, 22, 24, 28, 30, 32) have a periodicity in k, and in which values for lengths of adjacent time intervals (4, 6, 10, 12, 16, 20, 22, 24, 28, 30, 32) have a systematic ratio to one another.

4. Method according to one of the preceding claims, in which for at least one past time interval (4, 6, 10, 20, 22, 24), a deviation is determined by forming the difference between a predicted value for the length of said past time interval (4, 6, 10, 20, 22, 24) and an actually determined value of the length of said past time interval (4, 6, 10, 20, 22, 24), this at least one determined deviation being incorporated in the average error.

5. Method according to Claim 4, in which a plurality of determined deviations are weighted as a function of how far in the past a deviation formed for a past time interval (4, 6, 10, 20, 22, 24) is, deviations which are further in the past being less strongly weighted.

6. Method according to one of the preceding claims, in which it is provided that the component has a number of markings (60) which move in the event of a movement of the component relative to a defined position (64), a beginning of a time interval (4, 6, 10, 12, 16, 20, 22, 24, 28, 30, 32) being determined by the instant (8) at which a first marking (60) moves past the defined position (64), and an end of a time interval (4, 6, 10, 12, 16, 20, 22, 24, 28, 30, 32) being determined by the instant (8) at which a second marking (60) moves past the defined position (64).

7. Method according to one of the preceding claims, in which the value is embodied for a component of the motor which is designed as a transmitter module and executes a periodic movement.

8. Circuit arrangement for producing a value to be predicted, which has at least one data processing module (52) which is designed to determine a value for a length of a future time interval (16, 28, 30, 32) in which a physical variable changes, and in so doing to take into account at least one measured value for the length of a past time interval (4, 6, 10, 20, 22, 24) and a currently measured value for a length of a current time interval (12), and to add m values for lengths of past time intervals (4, 6, 10, 20, 22, 24), a first value preceding the currently measured value by k-1 and an mth value preceding the currently measured value by k-m, and to divide the m added values by a value of a length of a past time interval (4, 6, 10, 20, 22, 24) which precedes the currently measured value by k, and in so doing to form a ratio of said values, and the data processing module (52) being designed firstly to add an average error to the currently measured value in order to determine the value to be predicted, and thus to form a sum and subsequently to apply the ratio formed to said sum, the predicted value being used to control a motor, to control the level of a liquid, to control the mass of a component, to control the temperature of a component and/or to determine a prescribed phase relation of a component, in order thereby to determine the timing for an event.

9. Circuit arrangement according to Claim 8, which is designed as a module of a control device (56) for an internal combustion engine.

**Revendications**

1. Procédé de prédiction de la valeur de la longueur d'un intervalle de temps (16, 28, 30, 32) futur au cours duquel une grandeur physique se modifie, dans lequel :

au moins une valeur mesurée de la longueur d'un intervalle de temps (4, 6, 10, 20, 22, 24) passé et la valeur mesurée de la longueur de l'intervalle de temps (12) en cours sont prises en compte,
m valeurs de longueur d'intervalles de temps (4, 6, 10, 20, 22, 24) passés sont additionnées, une première valeur étant éloignée de k-1 de la valeur en cours de mesure et la m-ième valeur étant éloignée de k-m de la valeur en cours de mesure, les m valeurs additionnées étant divisées par la valeur de la longueur d'un intervalle de temps (4, 6, 10, 20, 22, 24) passé qui est éloigné de k de la valeur en cours de mesure, le rapport entre lesdites valeurs étant formé, et

pour déterminer la valeur de prédiction, une erreur moyenne est d'abord ajoutée à la valeur en cours de mesure pour ainsi former une somme, le rapport formé étant ensuite multiplié par la somme,

la valeur prédite étant utilisée pour commander un moteur, pour commander le niveau d'un liquide, pour commander la masse d'un composant, pour commander la température d'un composant et/ou pour déterminer un déphasage prédéterminé d'un composant, pour ainsi déterminer l'instant d'un événement.

2. Procédé selon la revendication 1, dans lequel la valeur de m est supérieure à 1 et inférieure ou égale à k.

3. Procédé selon l'une des revendications précédentes, dans lequel les valeurs de longueur des intervalles de temps (4, 6, 10, 12, 16, 20, 22, 24, 28, 30, 32) présentent une périodicité k, des valeurs de longueur d'intervalles de temps (4, 6, 10, 12, 16, 20, 22, 24, 28, 30, 32) voisins présentant un rapport systémique entre eux.

4. Procédé selon l'une des revendications précédentes, dans lequel pour au moins un intervalle de temps (4, 6, 10, 20, 22, 24), un écart est déterminé par formation de la différence entre la valeur prédite de la longueur de cet intervalle (4, 6, 10, 20, 22, 24) passé et la valeur effectivement constatée de la longueur de cet intervalle (4, 6, 10, 20, 22, 24) passé, le ou les écarts ainsi déterminés intervenant dans l'erreur moyenne.

5. Procédé selon la revendication 4, dans lequel plusieurs écarts déterminés sont pondérés en fonction de l'éloignement dans le passé de l'écart formé pour un intervalle de temps (4, 6, 10, 20, 22, 24) passé, les écarts plus lointains dans le passé étant pondérés moins fortement.

6. Procédé selon l'une des revendications précédentes, qui prévoit que le composant présente un certain nombre de repères (60) qui se déplacent par rapport à une position (64) définie lors du déplacement du composant, le début de l'intervalle de temps (4, 6, 10, 12, 16, 20, 22, 24, 28, 30, 32) étant défini par l'instant (8) auquel un premier repère (60) passe dans la position définie (64), la fin d'un intervalle (4, 6, 10, 12, 16, 20, 22, 24, 28, 30, 32) étant définie par l'instant (8) auquel un deuxième repère (60) passe dans la position définie (64).

7. Procédé selon l'une des revendications précédentes, dans lequel la valeur est formée pour un composant du moteur configuré comme module émetteur qui présente un déplacement périodique.

8. Circuit destiné à former une valeur de prédiction, qui présente au moins un module (52) de traitement de données configuré

pour déterminer la valeur de la longueur d'un intervalle de temps (16, 28, 30, 32) futur au cours duquel une grandeur physique se modifie, au moins une valeur mesurée de la longueur d'un intervalle de temps (4, 6, 10, 20, 22, 24) passé et une valeur en cours de mesure de la longueur de l'intervalle de temps actuel (12) étant prises en compte,

pour additionner m valeurs de longueur d'intervalle de temps (4, 6, 10, 20, 22, 24) passés, une première valeur étant éloignée de k-1 de la valeur en cours de mesure et la m-ième valeur étant éloignée de k-m de la valeur en cours de mesure et

pour diviser les m valeurs additionnées par la valeur de la longueur d'un intervalle de temps (4, 6, 10, 20, 22, 24) passé éloigné de k de la valeur en cours de mesure pour ainsi former un rapport entre lesdites valeurs,

le module (52) de traitement de données étant configuré pour

en vue de déterminer la valeur de prédiction, d'abord additionner une erreur moyenne à la valeur en cours de mesure et ainsi former une somme et ensuite appliquer le rapport ainsi formé sur cette somme, la valeur prédite étant utilisée pour commander un moteur, pour commander le niveau d'un liquide, pour commander la masse d'un composant, pour commander la température d'un composant et/ou pour déterminer un déphasage prédéterminé d'un composant, pour ainsi déterminer l'instant d'un événement.

9. Circuit selon la revendication 8 configuré comme module d'un appareil de commande (56) d'un moteur à combustion interne.

**Fig. 1**

**Fig. 2**

EP 2 534 547 B1

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10063755 A1

- DE 102005047922 A1